# EUROPEAN PATENT SPECIFICATION

(11) **EP 4 265 897 B1**
(45) Date of publication and mention of the grant of the patent: **24.09.2025**
(21) Application number: 23167974.7
(22) Date of filing: 14.04.2023
(51) Int. Cl.: F02C 7/22, B64D 37/30, B64D 37/34

(54) **HYDROGEN FUEL SYSTEM FOR AIRCRAFT**
WASSERSTOFFBRENNSTOFFSYSTEM FÜR FLUGZEUGE
SYSTÈME DE CARBURANT À HYDROGÈNE POUR AÉRONEF

(30) Priority: 22.04.2022 IN 202211023736
(43) Date of publication of application: 25.10.2023
(73) Proprietor: Eaton Intelligent Power Limited, Dublin 4, D04 Y0C2 (IE)
(72) Inventor: SARKAR, Subrata, 412207 Pune (IN)
(74) Representative: Schwan Schorer & Partner mbB

(56) References cited:
- WO-A1-2014/105333
- US-A- 5 660 358
- US-A1- 2020 398 992

## Description

### Background

Traditional fossil fuel-based aircraft system have been in use for many years. The fossil fuel is utilized within a combustor of a jet engine to produce thrust. Typically, an auxiliary power system also is provided aboard the aircraft to produce electrical power (e.g., for cabin electricity, to power the compressor for cabin pressurization, etc.) However, fossil fuel is not a clean burning energy source.

In WO 2014/105333 A1 there is disclosed an LNG fuel system for an aircraft comprising features as are recited in the pre-characterizing portion of claim 1.

### Summary

Hydrogen provides a cleaner burning fuel than traditional fossil fuel, resulting in fewer greenhouse gas emissions. However, the design of a hydrogen fuel system-especially for an aircraft-presents a number of challenges. For example, the hydrogen must be stored safely aboard the aircraft. Further, the weight of the aircraft should be mitigated to the extent possible.

Some aspects of the present invention are directed to fuel systems that utilize hydrogen (e.g., liquid hydrogen) within an engine to generate propulsion of an aircraft. Other aspects of the present invention are directed to fuel systems that utilize hydrogen for electric power on board the aircraft. Other aspects of the present invention are directed to fuel systems that utilizes hydrogen for both propulsion and onboard electricity.

In accordance with some aspects of the present invention, a hydrogen fuel system is configured to safely store the hydrogen both during flight and between flights. The hydrogen fuel system also is configured to transfer the hydrogen between storage and various equipment (e.g., an engine, a fuel cell, etc.). In certain implementations, the hydrogen fuel system is configured to accommodate vaporization of the hydrogen occurring during and/or between flights.

In some implementations, the hydrogen is stored primarily in a liquid form. When provided to an engine, the hydrogen may be converted to a supercritical liquid form. When provided to a fuel cell, the hydrogen may be converted to a high pressure gaseous state. In certain implementations, the fuel system provides thermal management during these transitions. In certain implementations, the fuel system provides pressure regulation at the fuel tank arrangement and/or throughout the fuel system.

The present invention is a a hydrogen fuel system for an aircraft as it is defined in claim 1. The hydrogen fuel system includes a fuel tank configured to store hydrogen in a liquid state; a boost pump arrangement disposed within the fuel tank; an engine feeder sub-system; and a fuel cell sub-system. The engine feeder sub-system includes a feed line, a high pressure pump, a first heat exchanger and a fuel injector, the feed line connecting the boost pump arrangement to the high pressure pump, the high pressure pump disposed at an engine of the aircraft. The high pressure pump directs fuel from the feed line to the first heat exchanger and then to the fuel injector. The first heat exchanger is configured to heat the hydrogen to a supercritical liquid state. The fuel cell sub-system includes a fuel cell arrangement. In accordance with the present invention the fuel cell sub-system further includes a second heat exchanger upstream of the fuel cell arrangement. The second heat exchanger is coupled to the feed line of the engine feeder sub-system. The second heat exchanger is configured to heat the hydrogen to a gaseous state. The fuel cell arrangement connects to the fuel tank via a fuel cell line of the fuel cell sub-system and a tank pressurization line separate from the feed line.

Preferred embodiments of the hydrogen fuel system are defined in the dependent claims.

In certain implementations, the engine feeder sub-system and/or the fuel cell sub-system receives hydrogen fuel from each of two fuel tanks. In certain examples, each fuel tank supplies fuel to a respective one of the engines of the aircraft. In certain examples, each fuel tank supplies fuel to the one or more engines of a respective wing of the aircraft. In certain examples, each of the fuel tanks may be separately isolated from the engine feeder sub-system and/or the fuel cell sub-system via shutoff valves. In certain examples, the feed lines may be joined at a crossfeed valve so that the engine feeder sub-system and/or the fuel cell sub-system may be supplied by only one of the fuel tanks.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### Brief Description of the Drawings

The accompanying drawings, which are incorporated in and constitute a part of the description, illustrate several aspects of the present invention. A brief description of the drawings is as follows:
FIG. 1 is a schematic diagram of an example hydrogen fuel system for an aircraft, the hydrogen fuel system including an engine feeder sub-system and a fuel cell sub-system;
FIG. 2 shows the fuel tanks of the hydrogen fuel system of FIG. 1;
FIG. 3 is an enlarged view of the diagram of FIG. 1 showing a portion of the engine feeder sub-system of FIG. 1;
FIG. 4 is an enlarged view of the diagram of FIG. 1 showing the fuel cell sub-system of FIG. 1; and
FIG. 5 illustrates a ventilation sub-system and a fuel line of the hydrogen fuel system of FIG. 1.

### Detailed Description

Reference will now be made in detail to exemplary aspects of the present invention that are illustrated in the accompanying drawings. Wherever possible, the same reference numbers will be used throughout the drawings to refer to the same or like parts.

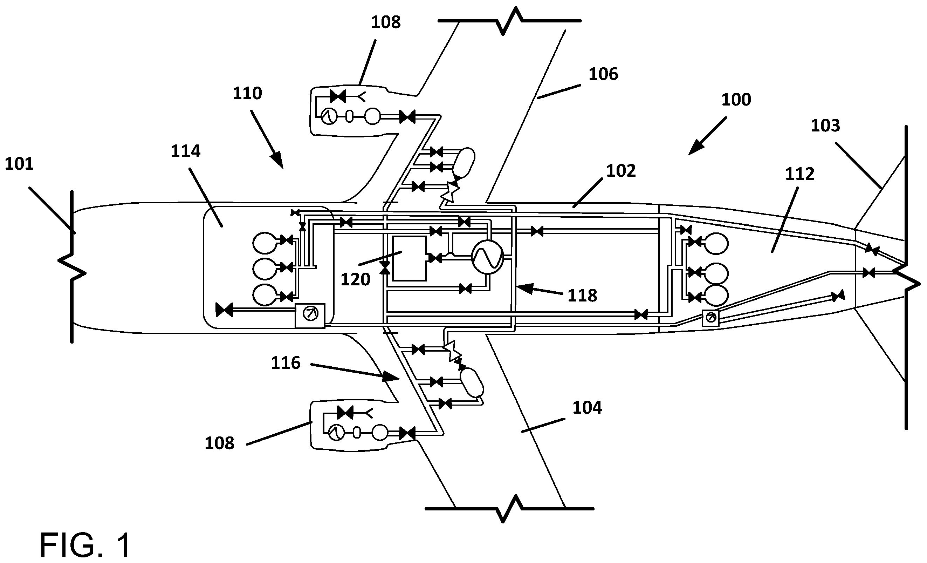

FIG. 1 illustrates an example aircraft 100 extending between a front 101 and a rear 103. The aircraft 100 includes a fuselage 102 in which a pilot and optionally one or more passengers and/or cargo may be carried. For example, the fuselage may include a cockpit, cabin, and/or cargo hold. The aircraft 100 also includes first and second wings 104, 106. Each wing 104, 106 carries one or more engines 108 (e.g., a turbine engine such as a Turbofan engine). The engines 108 generate thrust to propel the aircraft 100 forward.

The aircraft 100 includes a hydrogen fuel system 110 including one or more fuel tanks 112, 114 in which to store hydrogen fuel. In certain implementations, the fuel system 110 includes an engine feeder sub-system 116 that transfers hydrogen from the fuel tank(s) 112, 114 to the engines 108 as will be described in more detail herein. For example, the engine feeder sub-system 116 may pressurize the hydrogen fuel to generate flow from the fuel tank 112, 114, along a feed line 122, 128, to the engines 108 in which a supercritical form of the hydrogen is burned in combustors. In certain implementations, the hydrogen fuel system 110 includes a fuel cell sub-system 118 that transfers hydrogen between the fuel tank(s) 112, 114 and a fuel cell arrangement 120 for the generation of electricity as will be described in more detail herein. For example, the fuel cell sub-system 118 may pressurize the hydrogen fuel to generate flow from the fuel tank 112, 114 to a heat exchanger 160 upstream of the fuel cell arrangement 120 at which the hydrogen is transitioned into vapor for the fuel cell arrangement 120.

Each fuel tank 112, 114 is configured to hold hydrogen in a primarily liquid state. Portions of the hydrogen fuel may transition to vapor before, during, or after the flight. Systems for maintaining pressurization of the hydrogen fuel within the fuel tanks 112, 114 will be described in more detail herein. In certain implementations, each fuel tank 112, 114 is configured to hold the liquid hydrogen at a pressure ranging between 124 kPa (18 psia) and 165 kPa (24 psia). In certain examples, each fuel tank 112, 114 is configured to hold the liquid hydrogen at a pressure ranging between 138 kPa (20 psia) and 159 kPa (23 psia). In certain examples, each fuel tank 112, 114 is configured to hold the liquid hydrogen at a pressure of about 145 kPa (21 psia). In certain implementations, each fuel tank 112, 114 is configured to maintain the liquid hydrogen at a temperature between 18K and 25K. In certain examples, each fuel tank 112, 114 is configured to maintain the liquid hydrogen at a temperature of about 20K.

In the example shown, the hydrogen fuel system 110 includes a first fuel tank 112 disposed at the rear 103 of the aircraft 100 and a second fuel tank 114 disposed at the front 101 of the aircraft 100. In certain examples, the fuel cell sub-system 118 is disposed between the first and second fuel tanks 112, 114. In certain examples, the wings 104, 106 extend outwardly from the fuselage at a location between the first and second fuel tanks 112, 114. The first and second fuel tanks 112, 114 are positioned and sized to mitigate any effect on the center of gravity of the aircraft. In certain examples, the first and second fuel tanks 112, 114 have different shapes and sizes. In other implementations, the second fuel tank 114 can be disposed at a top of the fuselage (e.g., above the fuel cell sub-system 18 instead of at the front).

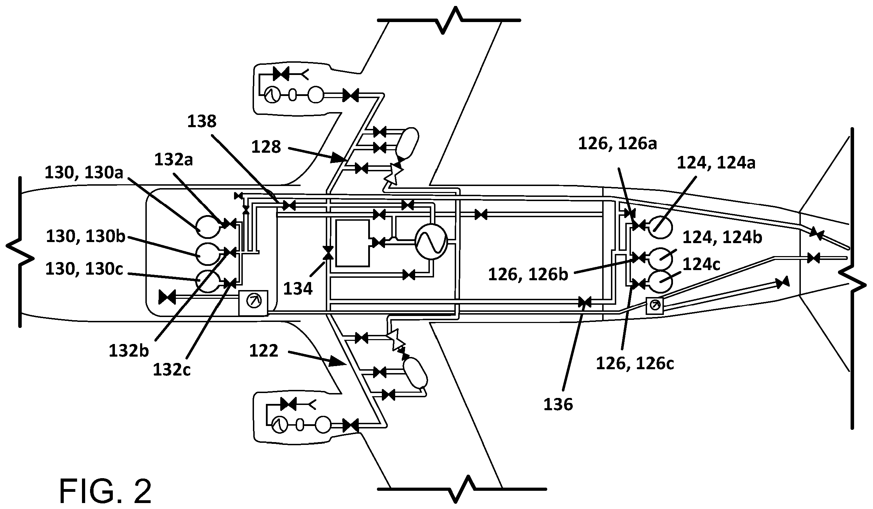

In certain implementations, each fuel tank 112, 114 is configured to supply fuel to the engine(s) 108 of a respective one of the wings 104, 106. In the example shown, the first tank 112 supplies hydrogen fuel to the engine(s) 108 of the first wing 104 and the second tank 114 supplies hydrogen fuel to the engine(s) 108 of the second wing 106. In certain implementations, the engine feeder sub-system 116 includes a first feed line 122, which extends between a pump arrangement 124 of the first tank 112 and the one or more engines 108 of the first wing 104, and a second feed line 128, which extends between a pump arrangement 130 of the second tank 114 and the one or more engines 108 of the second wing 106 (e.g., see FIG. 2).

In certain implementations, the fuel cell sub-system 118 is configured to provide fuel to the fuel cell arrangement 120 from both of the fuel tanks 112, 114 along different paths. For example, a first path of the fuel cell sub-system 118 is connected to the first feed line 122 and a second path of the fuel cell sub-system 118 is connected to the second feed line 128. In certain examples, each fuel tank 112, 114 supplies about the same amount of fuel to the fuel cell arrangement 120. In certain implementations, when the aircraft 100 is first started and before the engine 108 is operating, only one of the boost pumps 124, 130 within each fuel tank 112, 114 operates to supply fuel to the fuel cell arrangement 120. In some examples, the boost pump 124, 130 is powered by a battery until the fuel cell sub-system 118 is active. In other examples, the boost pump 124, 130 is powered by a ground power source until the fuel cell sub-system 118 is active.

In certain implementations, the first and second feed lines 122, 128 are separate from each other. In certain implementations, a crossfeed valve 134 separates the first and second feed lines 122, 128 (e.g., see FIG. 2). During normal operation of the aircraft, the crossfeed valve 134 remains closed. If the pump arrangement 124, 130 of one of the fuel tanks 112, 114 fails during operation of the aircraft, however, then the crossfeed valve 134 can be opened to allow the other pump arrangement 124, 130 to supply hydrogen fuel to the engines 108 of both wings 104, 106.

In certain implementations, each pump arrangement 124, 130 includes one or more boost pumps 124, 130 (e.g., see FIG. 2). In certain examples, each pump arrangement 124, 130 includes a respective plurality of boost pumps 124, 130. In the example shown, each pump arrangement 124, 130 includes three boost pumps 124a, 124b, 124c, 130a, 130b, 130c. In other examples, each pump arrangement 124, 130 may include a greater or lesser number of boost pumps 124, 130. In certain implementations, the boost pumps 124, 130 are low-pressure pumps (e.g., around 418 to 446 kPa (46-50 psig)). In certain implementations, the boost pumps 124, 130 are variable speed pumps. In certain implementations, the boost pumps 124, 130 are centrifugal pumps. In certain examples, the boost pumps 124, 130 are low-pressure, variable speed, centrifugal pumps.

In certain examples, the pump arrangement 124, 130 includes one more boost pump 124, 130 than necessary to operate the engine feeder sub-system 116. In certain examples, the additional boost pump 124, 130 can be used for redundancy in case of failure of one of the other boost pumps 124, 130. In some examples, the additional boost pump 124, 130 can be used to operate the fuel cell sub-system 118. In other examples, the same boost pump 124, 130 can be used in the operation of both the engine feeder sub-system 116 and the fuel cell sub-system 118.

A check valve 126, 132 is disposed at the outlet of each boost pump 124, 130. In certain implementations, the check valve 126, 132 is configured to provide thermal relief. When the respective boost pump 124, 130 is not operating, the hydrogen fuel within the pump 124, 130 will transition to vapor, thereby increasing pressure within the pump 124, 130. The thermal relief discharges the vapor from the pump 124, 130 back into the respective fuel tank 112, 114.

The tanks 112, 114 are sufficiently insulated to maintain the hydrogen fuel within an acceptable temperature range (e.g., between 18K - 25K). The feed lines 122, 128 are less insulated. Accordingly, shutoff valves 136, 138 are disposed along the first and second feed lines 122, 128 at the port for the fuel tanks 112, 114. The shutoff valves 136, 138 help to isolate the fuel tanks 112, 114 from the feed lines 122, 128 to mitigate the heat transfer through the feed lines 122, 128 to the tanks 112, 114. For example, the shutoff valves 136, 138 may be closed when the boost pumps 124, 130 are not supplying hydrogen fuel flow to the engine feeder sub-system 116 or to the fuel cell sub-system 118. In certain examples, the shutoff valves 136, 138 are disposed external of the fuel tanks 112, 114. In other implementations, the shutoff valves 136, 138 are omitted.

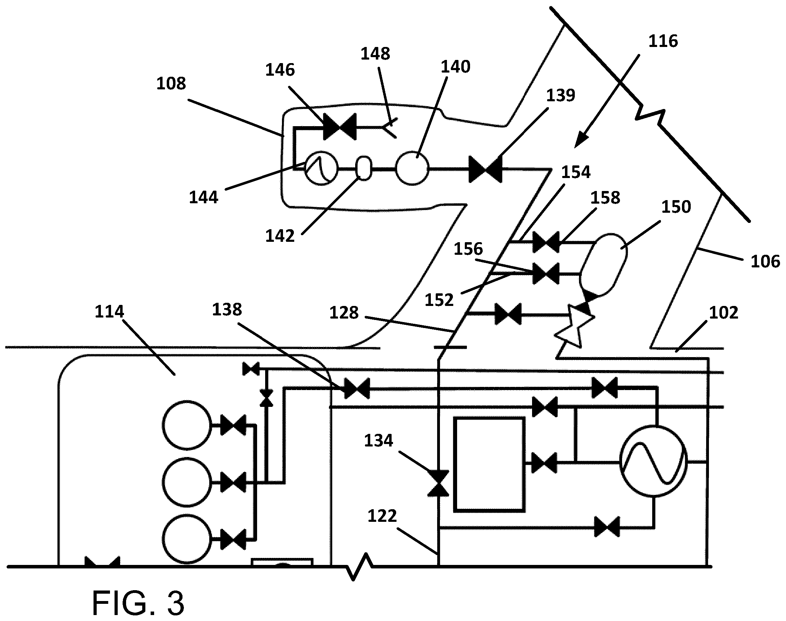

FIG. 3 is an enlarged view of an example engines 108 disposed on one of the wings 106 and the portion of the engine feeder sub-system 116 extending thereto. The feed lines 122, 128 extend between the crossfeed valve 134, which remains closed during normal operating conditions of the aircraft 100, and respective portions of the engine feeder sub-system 116. It will be understood that each feed line 122, 128 can service multiple engines 108 with the same configuration. It will be further understood that the feed line 122 servicing the other wing (not shown in FIG. 3) may have the same configuration as the feed line 128 shown in FIG. 3.

The feed line 122, 128 of the engine feeder sub-system 116 extends from the shutoff valve 138 at the respective fuel tank 112, 114 to another shutoff valve 139 disposed at a respective engine 108. During an emergency or other requirements, the flow of hydrogen fuel to the engines 108 can be stopped at the shutoff valves 139 or at the shutoff valves 138. In certain examples, the shutoff valves 139 are disposed outside the nacelles of the engines 108.

In certain implementations, the engine feeder sub-system 116 extends from the shutoff valve 139 to a high pressure pump 140. The high pressure pump 140 raises a pressure of the hydrogen fuel flowing along the feed line 128 to provide an appropriate injection pressure at a combustor of the engine 108. In certain examples, the high pressure pump 140 is a multistage pump. In certain examples, the high pressure pump 140 is centrifugal type pump. In certain examples, the high pressure pump 140 is a multistage centrifugal pump with a high operating speed. In certain examples, the high pressure pump 140 is mounted on an auxiliary gearbox of the engine 108.

In certain implementations, the combination of the high pressure pump 140 at the engine 108 and the one or more boost pumps 130 at the fuel tanks 112, 114 enables the omission of a fuel return line from the engine 108. Eliminating the fuel return lines reduces the weight of the aircraft 100 and increases fuel system efficiency.

The high pressure pump 140 directs the pressurized hydrogen fluid towards a heat exchanger 144. While in the fuel tanks 112, 114, the hydrogel fuel is maintained at a temperature of about 18K - 25K. While traveling through the feed lines 122, 128 and the high pressure pump 140, however, the temperature of the hydrogen fuel rises. In certain examples, the hydrogen fuel may have a temperature between 30K and 70K upon reaching the heat exchanger 144. In certain examples, the hydrogen fuel may have a temperature between 40K and 60K upon reaching the heat exchanger 144. In an example, the hydrogen fuel has a temperature around 50K upon reaching the heat exchanger 144. However, this raise in temperature is not sufficient to allow injection of the hydrogen fuel into the combustor without increasing the combustion instability. Further, injecting such cold hydrogel into the combustor may increase the specific fuel consumption of the combustor. Accordingly, the heat exchanger 144 further heats the hydrogen fuel to a temperature appropriate for use within the combustor (e.g., at least 100K, at least 200K, at least 250K, at least 280K, at least 290, or at least 300K). In certain implementations, the heat exchanger 144 also manages the heat from other components of the engine 108 to enhance the overall efficiency of the engine 108. For example, the heat exchanger 144 may extract waste heat from the engine exhaust, the turbine blade, the oil heat exchanger, and/or the Environmental Control System. This extracted heat may be used to heat the hydrogen fuel.

A flow meter unit 142 may be disposed between the high pressure pump 140 and the heat exchanger 144. The flow meter unit 142 regulates the flow supply to the combustor based on commands received from an electronic control unit (not shown).

From the heat exchanger 144, the hydrogen fuel flow is directed to an injection valve 146 and injection nozzle 148. The high pressure pump 140 is configured to sufficiently pressurize the hydrogen fuel to overcome the pressure drop associated with the heat exchanger 144, the flow meter unit 142, and the injection valve 146. The injection nozzle 148 directs the heated, pressurized hydrogen fuel into the combustor of the engine 108. In certain examples, the hydrogen fuel is heated and pressurized to a supercritical fluid before reaching the combustor.

A respective accumulator 150 can be disposed along each of the feed line 122, 128. An accumulator input line 152 may lead from the feed line 122, 128 to an input of the accumulator 150 and an accumulator output line 154 may lead from an output of the accumulator 150 back to the feed line 122, 128. In certain examples, the connection between the feed line 122, 128 and the accumulator input line 152 is upstream of the connection between the feed line 122, 128 and the accumulator output line 154. Accordingly, while hydrogen fuel is being supplied along the feed line 122, 128 to the engine 108, a portion of the hydrogen fuel may be directed along the accumulator input line 152 to the accumulator 150. The accumulator 150 stores pressurized hydrogen fuel received from the input line 152. A shutoff valve 156 opens to direct flow to the accumulator 150 during flow to the engine 108 and closes when the accumulator 150 is filled. In certain examples, another shutoff valve 158 is disposed along the accumulator output line 154 to block flow from leaving the accumulator 150. The shutoff valves 156 are controlled by an electronic control unit.

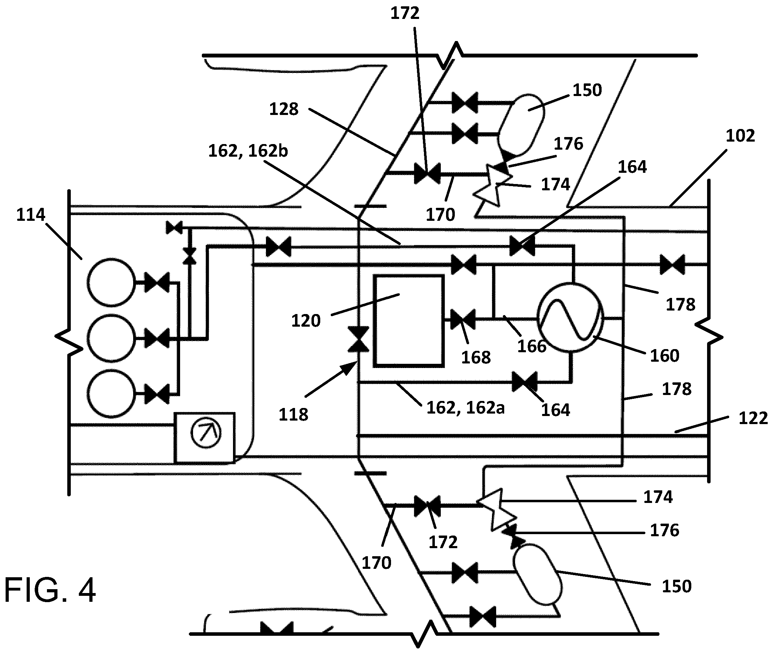

In certain implementations, the accumulator 150 supplies pressurized hydrogen to the respective engine(s) 108 by opening the shutoff valves 158. For example, the accumulator 150 may supply the pressurized hydrogen when the boost pump 124, 130 is not operational (e.g., during engine restart). In another example, the accumulator 150 may supply the pressurized hydrogen when pressure within the feed lines 122, 128 drops below a predetermined threshold due to a negative g operation. For example, the accumulator 150 may supply the pressurized hydrogen when pressure within the feed lines 122, 128 drops below 418 kPa (46 psig). Another function of the accumulator 150 will be described in more detail herein with reference to FIG. 4.

FIG. 4 is an enlarged view of an example implementation of the fuel cell sub-system 118. The fuel cell sub-system 118 includes cell feed lines 162 leading from the feed lines 122, 128 to a heat exchanger 160. An output line 166 leads from the heat exchanger 160 to a fuel cell arrangement 120. The fuel cell arrangement 120 includes one or more stacks of one or more fuel cells. Each fuel cell is configured to receive the hydrogen fuel and to convert chemical energy of the hydrogen fuel and an oxidizing agent into electricity. A shutoff valve 168 is disposed at the fuel cell arrangement 120 to selectively stop the flow of fuel to the fuel cell arrangement 120 (e.g., when the fuel cell arrangement 120 is not operating or during an emergency condition).

The electricity can be used to power various equipment on the aircraft. For example, the electricity can be used to power equipment (e.g., a compressor or pump) to pressurize the cabin, to provide lighting and/or heat within the cabin, to power defrosters on the wings or other parts of the aircraft 100, to start the engine 108, to power the instrument panel within the cockpit, and/or to power the mission and flight control processor system of the aircraft 100. In certain examples, the fuel cell sub-system 118 enables the omission of a standard auxiliary power unit (e.g., a gas turbine engine typically installed at a tail of the aircraft). Accordingly, the only fuel needed to be supplied to the aircraft 100 is hydrogen.

In certain implementations, the fuel cell sub-system 118 also can contribute power for propulsion of the aircraft. For example, the engine 108 may be sized to enhance efficiency during cruising of the aircraft, which requires less power, instead of for takeoff, which requires more power. In such examples, the takeoff power is supplied by both the engine combustor and the fuel cell arrangement 120. For example, electricity generated by the fuel cell arrangement 120 can be directed to a hybrid electrical powertrain of the engine 108. Sizing the engines 108 for cruising instead of takeoff allows for the utilization of smaller/lighter engines.

In certain implementations, one cell feed line 162a leads from the first feed line 122 and another cell feed line 162b leads from the second feed line 128. Accordingly, the fuel cell arrangement 120 may receive hydrogen fuel from both fuel tanks 112, 114. In other implementations, however, the fuel cell arrangement 120 may receive fuel from only one of the tanks 112,1 14. Each cell feed line 162a, 162b has a flow control valve 164 that regulates the hydrogen fuel flow to the fuel cell arrangement 120. In some implementations, the fuel tanks 112, 114 are sufficiently pressurized that fuel flows to the fuel cell arrangement 120. In other implementations, one of the boost pumps 124, 130 within the fuel tanks 112, 114 may operate to push the hydrogen fuel towards the fuel cell arrangement 120.

The fuel cell arrangement 120 produces heat. For example, a ratio of heat to power production capacity of the fuel cell arrangement 120 may be about 1:1. The heat exchanger 160 manages the waste heat produced by the fuel cell arrangement 120. The hydrogen fuel is routed along the cell feed lines 162, 162a, 162b to the heat exchanger to act as the cooling medium. The heat exchanger 160 transfers the waste heat to the hydrogen fuel as the hydrogen fuel passes through the heat exchanger 160 towards the fuel cell arrangement 120. Increasing the temperature of the hydrogel fuel causes the fuel to transition to a gaseous state for use within the fuel cell arrangement 120. In certain implementations, the heat exchanger 160 may be supplemented by a secondary thermal management system such as an Ethylene Glycol heat transfer unit.

During a non-operational state of the aircraft 100, heat soak (e.g., from the fuel cell arrangement 120 and/or from the engines 108) will transform the hydrogen fuel left in the feed lines 122, 128 to vapor. This vapor increases pressure within the feed lines 122, 128. In certain implementations, the shutoff valves 136, 138 may include a reverse flow check valve configured to discharge the excess pressure into the respective tank 112, 114.

In certain implementations, jet pumps 174 are disposed between the feed lines 122, 128 and the heat exchanger 160. For example, a jet pump 174 can have a first input line 170 in communication with the feed line 122, 128, a second input line 176 in communication with the accumulator 150, and an output line 178 in communication with the heat exchanger 160. When needed, liquid hydrogen is released from the accumulator 150 and carried along the second input line 176, through the jet pump 174, and into the output line 178. Thereby, the high pressure liquid hydrogen in the accumulator 150 forms the motive flow of the jet pump 174. This motive flow induces flow of hydrogen vapor from the feed lines 122, 128 into the output line 178 via the first input lines 170. Accordingly, the hydrogen vapor extracted from the feed liners 122, 128 is supplied to the fuel cell arrangement 120 along with the pressurized liquid hydrogen from the accumulator 150. In certain examples, check valves 172 are disposed along the first input lines 170 to inhibit reverse flow from the fuel cell sub-system 118 back to the feed lines 122, 128. In certain examples, the check valves 172 are closed when the jet pumps 174 are not operating. In certain examples, the jet pumps 174 cooperate with the reverse flow check valves of the fuel tank shutoff valves 136, 138 to extract hydrogen vapor from the feed lines 122, 128.

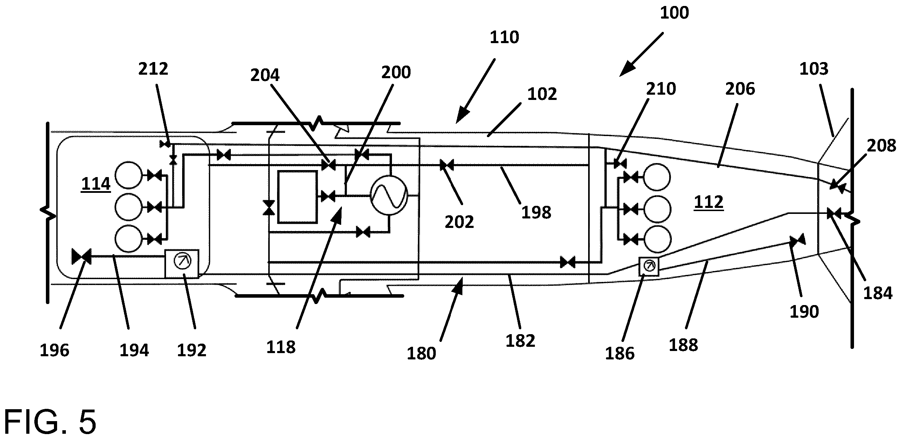

Referring to FIG. 5, the fuel system 110 includes a ventilation sub-system 180 that allows hydrogen vapor to be removed from the fuel tanks 112, 114 (e.g., to decrease pressure within the tanks 112, 114, to provide room for additional liquid hydrogen, etc.). The ventilation sub-system 180 includes a ventilation line 182 extending from a port 184 to a pressure regulator assembly 186 at the first fuel tank 112 and a pressure regulator assembly 192 at the second fuel tank 114. The pressure regulator assemblies 186, 192 maintain pressure within the fuel tanks 112, 114 (e.g., at around 145 kPa (21 psia)).

Some of the hydrogen fuel in the fuel tanks 112, 114 may vaporize over time, which increases pressure within the fuel tanks 112, 114. Alternatively, vapor from the feed lines 122, 128 may be transferred to the tanks 112, 114 at the valves 136, 138 to reduce pressure within the feed lines 122, 128. As pressure within the tanks 112, 114 builds up beyond a predetermined threshold (e.g., beyond 145 kPa (21 psia), beyond 152 kPa (22 psia), beyond 159 kPa (23 psia)), the pressure regulators 186, 192 open and release excess pressure into the atmosphere (i.e., outside the aircraft 100). In particular, hydrogen vapor from the fuel tanks 112, 114 enters ventilation sub-lines 188, 194 at check valves 190, 196 and flows to the pressure regulators 186, 192. In certain examples, each pressure regulator 186, 192 includes two regulator valves. A first valve of each pressure regulator 186, 192 opens at the predetermined threshold. A second valve of each pressure regulator is provided for redundancy and so opens at a second threshold higher than the predetermined threshold (e.g., beyond 152 kPa (22 psia), beyond 159 kPa (23 psia), beyond 165 kPa (24 psia)).

In certain implementations, the ventilation sub-system 180 also includes a tank pressurization line 198 that extends between the first and second fuel tanks 112, 114. The tank pressurization line 198 also connects to the fuel cell sub-system 118 so that hydrogen vapor may be transferred between the fuel tanks 112, 114 and the fuel cell sub-system 118. Accordingly, vapor can be removed from the fuel tanks 112, 114 and directed to the fuel cell 120 for consumption to further generate electrical power. In an example, excess hydrogen vapor may be transitioned from the fuel tanks 112, 114 to the tank pressurization line 198 when the pressure within the fuel tanks 112, 114 exceeds a predetermined threshold (e.g., 145 kPa (21 psia), 152 kPa (22 psia), 159 kPa (23 psia)). Directing the excess hydrogen vapor to the fuel cell arrangement 120 instead of venting to the atmosphere reduces hydrogen loss from the fuel system 110.

Furthermore, during flight, pressure within the fuel tanks 112, 114 may decrease. If left unchecked, this decreased pressure encourages the generation of additional hydrogen vapor. The decreased pressure also can apply a load to the structure of the fuel tanks 112, 114. To mitigate a decrease in pressure, high-pressure hydrogen vapor can be transferred from the fuel cell arrangement 120 via a fuel cell line 200 to the tank pressurization line 198 and, thereby, to the fuel tanks 112, 114 to increase the pressure within the fuel tanks 112, 114. The fuel cell line 200 is downstream of the heat exchanger 160 so the hydrogen within the fuel cell line 200 is pressurized. In certain examples, the tank pressurization line 198 has a first shut-off valve 202 between the fuel cell line 200 and the first fuel tank 112 and a second shut-off valve 204 between the fuel cell line 200 and the second fuel tank 114 so that pressurized vapor can be transferred to either of the fuel tanks 112, 114 or both fuel tanks 112, 114 as needed.

In certain implementations, the fuel system 110 includes a refueling/defueling line 206 extending from a fuel port 208 to a first valve 210 at the first fuel tank 112 and to a second valve 212 at the second fuel tank 114. In certain examples, the fuel port 208 is accessible from an exterior of the aircraft 100. On the ground, fuel can be supplied to the aircraft through the fuel port 208, along the refueling/defueling line 206, and into the fuel tanks 112, 114. During refueling (e.g., on the ground), hydrogen vapor can be removed from the fuel tanks 112, 114 via the first ventilation line 182 and the port 184. In particular, the pressure regulators 186, 192 remain open. The check valves 190, 196 inhibit liquid hydrogen from entering into the vent lines. In certain examples, the vapor obtained from the first ventilation line 182 can be processed at liquification equipment for use as fuel in the same or another aircraft 100.

Having described the preferred aspects and implementations of the present disclosure, modifications of the disclosed concepts may readily occur to one skilled in the art. However, it is intended that such modifications be included within the scope of the claims which are appended hereto.

## Claims

1. A hydrogen fuel system (110) for an aircraft (100), the hydrogen fuel system comprising:
a fuel tank (112, 114) configured to store hydrogen in a liquid state;
a boost pump arrangement (124, 130) disposed within the fuel tank (112, 114);
an engine feeder sub-system (116) including a feed line (122, 128), a high pressure pump (140), a first heat exchanger (144) and a fuel injector (148), the feed line (122, 128) connecting the boost pump arrangement (124, 130) to the high pressure pump (140), the high pressure pump (140) disposed at an engine (108) of the aircraft (100) and directing fuel from the feed line to the first heat exchanger (144) and then to the fuel injector (148), the first heat exchanger (144) being configured to heat the hydrogen to a supercritical liquid state; and
a fuel cell sub-system (118) including a fuel cell arrangement;
**characterized in that**
the fuel cell sub-system (118) further includes a second heat exchanger (160) upstream of the fuel cell arrangement (120), the second heat exchanger being coupled to the feed line (122, 128) of the engine feeder sub-system (116), the second heat exchanger being configured to heat the hydrogen to a gaseous state; and
the fuel cell arrangement (120) connects to the fuel tank (112, 114) via a fuel cell line (200) of the fuel cell sub-system (118) and a tank pressurization line (198) separate from the feed line (122, 128).

2. The hydrogen fuel system (110) of claim 1, wherein the boost pump arrangement (124, 130) includes three boost pumps (124a, 124b, 124c, 130a, 130b, 130c).

3. The hydrogen fuel system (110) of claim 1, wherein a flow meter unit (142) is disposed between the high pressure pump (140) and the first heat exchanger (144).

4. The hydrogen fuel system (110) of claim 1, further comprising an accumulator (150) disposed in parallel with the feed line (122, 128) via input and output lines (152, 154), the accumulator being configured to store pressurized fuel.

5. The hydrogen fuel system (110) of claim 4, further comprising a jet pump (174) having a first input connected to the accumulator (150), a second input connected to the feed line (122, 128), and an output connected to the fuel cell sub-system (118), the jet pump configured to suck hydrogen vapor from the feed line and to direct the sucked hydrogen vapor to the fuel cell sub-system.

6. The hydrogen fuel system (110) of any of claims 1-5, wherein the fuel tank is a first fuel tank (112), the boost pump arrangement is a first boost pump arrangement (124), the feed line is a first feed line (122), the high pressure pump is a first high pressure pump (140), and the engine is a first engine (108); and wherein the hydrogen fuel system further comprises a second fuel tank (114), a second boost pump arrangement (130) at the second fuel tank, and a second feed line (128) extending from the second boost pump arrangement to a second high pressure tank at a second engine (108) of the aircraft (100).

7. The hydrogen fuel system (110) of claim 6, wherein the first engine (108) is disposed at a first wing (104) of the aircraft and the second engine (108) is disposed at a second wing (106) of the aircraft (100).

8. The hydrogen fuel system (110) of claim 6 or claim 7, wherein the first and second fuel tanks (112, 114) are disposed at opposite sides of the fuel cell sub-system (118).

9. The hydrogen fuel system (110) of any of claims 6-8, wherein the first and second feed lines (122, 128) are selectively isolated from each other at a crossfeed valve (134).

10. The hydrogen fuel system (110) of any of claims 6-9, wherein the second heat exchanger (160) of the fuel cell sub-system (118) also being coupled to the second feed line (128).

11. The hydrogen fuel system (110) of claim 10, further comprising a first shutoff valve configured to selectively isolate the second heat exchanger (160) from the first feed line (122) and a second shutoff valve configured to selectively isolate the second heat exchanger from the second feed line (128).

12. The hydrogen fuel system (110) of any of claims 1-11, further comprising a ventilation sub-system (180) including a ventilation line (182) extending between a pressure regulator (186, 192) at the fuel tank (112, 114) and a port to atmosphere.

13. The hydrogen fuel system (110) of claim 12, and preferably of claims 6 and 12, wherein the ventilation line (182) extends between respective pressure regulators (186, 192) at the first and second fuel tanks (112, 114) and the port to atmosphere.

14. The hydrogen fuel system (110) of any of claims 1-13, wherein the tank pressurization line (198) extends between the fuel tank (112, 114) and the fuel cell line (200) of the fuel cell sub-system (118) separate from the feed line (122, 128), the tank pressurization line (198) being in communication with hydrogen vapor within the fuel tank (112, 114), the fuel cell line (200) being disposed downstream of the second heat exchanger (160) and upstream of the fuel cell arrangement (120).

15. The hydrogen fuel system (110) of claim 14, and preferably of claims 6 and 14, wherein a first shutoff valve selectively isolates the first fuel tank (112) from the fuel cell line and a second shutoff valve selectively isolates the second fuel tank (114) from the fuel cell line.

## Patentansprüche

1. Wasserstoffbrennstoffsystem (110) für ein Flugzeug (100), wobei das Wasserstoffbrennstoffsystem Folgendes umfasst:
einen Brennstofftank (112, 114), der zum Speichern von Wasserstoff in flüssigem Zustand konfiguriert ist;
eine innerhalb des Brennstofftanks (112, 114) angeordnete Druckerhöhungs-Pumpenanordnung (124, 130);
ein Motor-Zufuhr-Teilsystem (116), das eine Zufuhrleitung (122, 128), eine Hochdruckpumpe (140), einen ersten Wärmetauscher (144) und eine Brennstoffeinspritzdüse (148) einschließt, wobei die Zufuhrleitung (122, 128) die Druckerhöhungs-Pumpenanordnung (124, 130) mit der Hochdruckpumpe (140) verbindet, wobei die Hochdruckpumpe (140) an einem Motor (108) des Flugzeugs (100) angeordnet ist und Brennstoff aus der Zufuhrleitung zum ersten Wärmetauscher (144) und dann zu der Brennstoffeinspritzdüse (148) leitet, wobei der erste Wärmetauscher (144) so konfiguriert ist, dass er den Wasserstoff auf einen überkritischen flüssigen Zustand erwärmt; und
ein Brennstoffzellen-Teilsystem (118), das eine Brennstoffzellenanordnung einschließt;
**dadurch gekennzeichnet, dass**
das Brennstoffzellen-Teilsystem (118) weiter einen zweiten Wärmetauscher (160) stromaufwärts der Brennstoffzellenanordnung (120) einschließt, wobei der zweite Wärmetauscher mit der Zufuhrleitung (122, 128) des Motor-Zufuhr-Teilsystems (116) gekoppelt ist, wobei der zweite Wärmetauscher konfiguriert ist, um den Wasserstoff in einen gasförmigen Zustand zu erwärmen; und
die Brennstoffzellenanordnung (120) über eine Brennstoffzellenleitung (200) des Brennstoffzellen-Teilsystems (118) und eine von der Zufuhrleitung (122, 128) separate Tankdruckleitung (198) mit dem Brennstofftank (112, 114) verbunden ist.

2. Wasserstoffbrennstoffsystem (110) nach Anspruch 1, wobei die Druckerhöhungs-Pumpenanordnung (124, 130) drei Druckerhöhungspumpen (124a, 124b, 124c, 130a, 130b, 130c) einschließt.

3. Wasserstoffbrennstoffsystem (110) nach Anspruch 1, wobei eine Durchflussmesseinheit (142) zwischen der Hochdruckpumpe (140) und dem ersten Wärmetauscher (144) angeordnet ist.

4. Wasserstoffbrennstoffsystem (110) nach Anspruch 1, das weiter einen Speicher (150) umfasst, der über Einlass- und Auslassleitungen (152, 154) parallel zu der Zufuhrleitung (122, 128) angeordnet ist, wobei der Speicher zum Speichern von unter Druck stehendem Brennstoff konfiguriert ist.

5. Wasserstoffbrennstoffsystem (110) nach Anspruch 4, ferner umfassend eine Strahlpumpe (174), die einen ersten Einlass aufweist, der mit dem Speicher (150) verbunden ist, einen zweiten Einlass, der mit der Zufuhrleitung (122, 128) verbunden ist, und einen Auslass, der mit dem Brennstoffzellen-Teilsystem (118) verbunden ist, wobei die Strahlpumpe so konfiguriert ist, dass sie Wasserstoffdampf aus der Zufuhrleitung ansaugt und den angesaugten Wasserstoffdampf zum Brennstoffzellen-Teilsystem leitet.

6. Wasserstoffbrennstoffsystem (110) nach einem der Ansprüche 1 bis 5, wobei der Brennstofftank ein erster Brennstofftank (112) ist, die Druckerhöhungs-Pumpenanordnung eine erste Druckerhöhungs-Pumpenanordnung (124) ist, die Zufuhrleitung eine erste Zufuhrleitung (122) ist, die Hochdruckpumpe eine erste Hochdruckpumpe (140) ist und der Motor ein erster Motor (108) ist; und wobei das Wasserstoffbrennstoffsystem weiter einen zweiten Brennstofftank (114), eine zweite Druckerhöhungs-Pumpenanordnung (130) am zweiten Brennstofftank und eine zweite Zufuhrleitung (128) umfasst, die sich von der zweiten Druckerhöhungs-Pumpenanordnung zu einem zweiten Hochdrucktank an einem zweiten Motor (108) des Flugzeugs (100) erstreckt.

7. Wasserstoffbrennstoffsystem (110) nach Anspruch 6, wobei der erste Motor (108) an einem ersten Flügel (104) des Flugzeugs und der zweite Motor (108) an einem zweiten Flügel (106) des Flugzeugs (100) angeordnet ist.

8. Wasserstoffbrennstoffsystem (110) nach Anspruch 6 oder 7, wobei der erste und der zweite Brennstofftank (112, 114) an gegenüberliegenden Seiten des Brennstoffzellen-Teilsystems (118) angeordnet sind.

9. Wasserstoffbrennstoffsystem (110) nach einem der Ansprüche 6 bis 8, wobei die erste und die zweite Zufuhrleitung (122, 128) an einem Querverteilerventil (134) selektiv voneinander isoliert sind.

10. Wasserstoffbrennstoffsystem (110) nach einem der Ansprüche 6 bis 9, wobei der zweite Wärmetauscher (160) des Brennstoffzellen-Teilsystems (118) ebenfalls mit der zweiten Zufuhrleitung (128) gekoppelt ist.

11. Wasserstoffbrennstoffsystem (110) nach Anspruch 10, das weiter ein erstes Absperrventil, das so konfiguriert ist, dass es den zweiten Wärmetauscher (160) selektiv von der ersten Zufuhrleitung (122) isoliert, und ein zweites Absperrventil umfasst, das so konfiguriert ist, dass es den zweiten Wärmetauscher selektiv von der zweiten Zufuhrleitung (128) isoliert.

12. Wasserstoffbrennstoffsystem (110) nach einem der Ansprüche 1 bis 11, das ferner ein Belüftungs-Teilsystem (180) umfasst, das eine Belüftungsleitung (182) einschließt, die sich zwischen einem Druckregler (186, 192) am Brennstofftank (112, 114) und einer Öffnung zur Atmosphäre erstreckt.

13. Wasserstoffbrennstoffsystem (110) nach Anspruch 12 und vorzugsweise nach den Ansprüchen 6 und 12, wobei die Belüftungsleitung (182) sich zwischen jeweiligen Druckreglern (186, 192) an dem ersten und dem zweiten Brennstofftank (112, 114) und der Öffnung zur Atmosphäre erstreckt.

14. Wasserstoffbrennstoffsystem (110) nach einem der Ansprüche 1 bis 13, wobei die Tankdruckleitung (198) sich zwischen dem Brennstofftank (112, 114) und der Brennstoffzellenleitung (200) des Brennstoffzellen-Teilsystems (118) separat von der Zufuhrleitung (122, 128) erstreckt, wobei die Tankdruckleitung (198) mit dem Wasserstoffdampf im Brennstofftank (112, 114) in Verbindung steht, wobei die Brennstoffzellenleitung (200) stromabwärts vom zweiten Wärmetauscher (160) und stromaufwärts von der Brennstoffzellenanordnung (120) angeordnet ist.

15. Wasserstoffbrennstoffsystem (110) nach Anspruch 14 und vorzugsweise nach den Ansprüchen 6 und 14, wobei ein erstes Absperrventil den ersten Brennstofftank (112) selektiv von der Brennstoffzellenleitung isoliert und ein zweites Absperrventil den zweiten Brennstofftank (114) selektiv von der Brennstoffzellenleitung isoliert.

## Revendications

1. Système de carburant à hydrogène (110) pour un aéronef (100), le système de carburant à hydrogène comprenant :
un réservoir de carburant (112, 114) conçu pour stocker de l'hydrogène à l'état liquide ;
un agencement de pompe de suralimentation (124, 130) disposé à l'intérieur du réservoir de carburant (112, 114) ;
un sous-système d'alimentation moteur (116) comprenant une conduite d'alimentation (122, 128), une pompe haute pression (140), un premier échangeur de chaleur (144) et un injecteur de carburant (148), la conduite d'alimentation (122, 128) raccordant l'agencement de pompe de suralimentation (124, 130) à la pompe haute pression (140), la pompe haute pression (140) étant disposée sur un moteur (108) de l'aéronef (100) et dirigeant le carburant de la conduite d'alimentation vers le premier échangeur de chaleur (144), puis vers l'injecteur de carburant (148), le premier échangeur de chaleur (144) étant conçu pour chauffer l'hydrogène jusqu'à un état liquide supercritique ; et
un sous-système de pile à combustible (118) comprenant un agencement de pile à combustible ;
**caractérisé en ce que**
le sous-système de pile à combustible (118) comprend en outre un second échangeur de chaleur (160) en amont de l'agencement de pile à combustible (120), le second échangeur de chaleur étant couplé à la conduite d'alimentation (122, 128) du sous-système d'alimentation moteur (116), le second échangeur de chaleur étant conçu pour chauffer l'hydrogène jusqu'à l'état gazeux ; et
l'agencement de pile à combustible (120) est raccordé au réservoir de carburant (112, 114) par l'intermédiaire d'une conduite de pile à combustible (200) du sous-système de pile à combustible (118) et d'une conduite de mise sous pression du réservoir (198), séparée de la conduite d'alimentation (122, 128).

2. Système de carburant à hydrogène (110) selon la revendication 1, dans lequel l'agencement de pompe de suralimentation (124, 130) comprend trois pompes de suralimentation (124a, 124b, 124c, 130a, 130b, 130c).

3. Système de carburant à hydrogène (110) selon la revendication 1, dans lequel une unité de débitmètre (142) est disposée entre la pompe haute pression (140) et le premier échangeur de chaleur (144).

4. Système de carburant à hydrogène (110) selon la revendication 1, comprenant en outre un accumulateur (150) disposé en parallèle avec la conduite d'alimentation (122, 128) via des conduites d'entrée et de sortie (152, 154), l'accumulateur étant conçu pour stocker du carburant sous pression.

5. Système de carburant à hydrogène (110) selon la revendication 4, comprenant en outre une pompe à jet (174) ayant une première entrée raccordée à l'accumulateur (150), une seconde entrée raccordée à la conduite d'alimentation (122, 128) et une sortie raccordée au sous-système de pile à combustible (118), la pompe à jet étant conçue pour aspirer la vapeur d'hydrogène de la conduite d'alimentation et pour diriger la vapeur d'hydrogène aspirée vers le sous-système de pile à combustible.

6. Système de carburant à hydrogène (110) selon l'une quelconque des revendications 1 à 5, dans lequel le réservoir de carburant est un premier réservoir de carburant (112), l'agencement de pompe de suralimentation est un premier agencement de pompe de suralimentation (124), la conduite d'alimentation est une première conduite d'alimentation (122), la pompe haute pression est une première pompe haute pression (140), et le moteur est un premier moteur (108) ; et dans lequel le système de carburant à hydrogène comprend en outre un second réservoir de carburant (114), un second agencement de pompe de suralimentation (130) au niveau du second réservoir de carburant, et une seconde conduite d'alimentation (128) s'étendant du second agencement de pompe de suralimentation à un second réservoir haute pression au niveau d'un second moteur (108) de l'aéronef (100).

7. Système de carburant à hydrogène (110) selon la revendication 6, dans lequel le premier moteur (108) est disposé sur une première aile (104) de l'aéronef et le second moteur (108) est disposé sur une seconde aile (106) de l'aéronef (100).

8. Système de carburant à hydrogène (110) selon la revendication 6 ou la revendication 7, dans lequel les premier et second réservoirs de carburant (112, 114) sont disposés sur des côtés opposés du sous-système de pile à combustible (118).

9. Système de carburant à hydrogène (110) selon l'une quelconque des revendications 6 à 8, dans lequel les première et seconde conduites d'alimentation (122, 128) sont sélectivement isolées l'une de l'autre au niveau d'une valve d'intercommunication (134).

10. Système de carburant à hydrogène (110) selon l'une quelconque des revendications 6 à 9, dans lequel le second échangeur de chaleur (160) du sous-système de pile à combustible (118) est également accouplé à la seconde conduite d'alimentation (128).

11. Système de carburant à hydrogène (110) selon la revendication 10, comprenant en outre un premier robinet d'arrêt conçu pour isoler sélectivement le second échangeur de chaleur (160) de la première conduite d'alimentation (122) et un second robinet d'arrêt conçu pour isoler sélectivement le second échangeur de chaleur de la seconde conduite d'alimentation (128).

12. Système de carburant à hydrogène (110) selon l'une quelconque des revendications 1 à 11, comprenant en outre un sous-système de ventilation (180) comprenant une conduite de ventilation (182) s'étendant entre un régulateur de pression (186, 192) au niveau du réservoir de carburant (112, 114) et un orifice vers l'atmosphère.

13. Système de carburant à hydrogène (110) selon la revendication 12, et de préférence selon les revendications 6 et 12, dans lequel la conduite de ventilation (182) s'étend entre des régulateurs de pression (186, 192) respectifs au niveau des premier et second réservoirs de carburant (112, 114) et l'orifice vers l'atmosphère.

14. Système de carburant à hydrogène (110) selon l'une quelconque des revendications 1 à 13, dans lequel la conduite de mise sous pression du réservoir (198) s'étend entre le réservoir de carburant (112, 114) et la conduite de pile à combustible (200) du sous-système de pile à combustible (118) séparément de la conduite d'alimentation (122, 128), la conduite de mise sous pression du réservoir (198) étant en communication avec la vapeur d'hydrogène à l'intérieur du réservoir de carburant (112, 114), la conduite de pile à combustible (200) étant disposée en aval du second échangeur de chaleur (160) et en amont de l'agencement de pile à combustible (120).

15. Système de carburant à hydrogène (110) selon la revendication 14, et de préférence selon les revendications 6 et 14, dans lequel un premier robinet d'arrêt isole sélectivement le premier réservoir de carburant (112) de la conduite de pile à combustible et un second robinet d'arrêt isole sélectivement le second réservoir de carburant (114) de la conduite de pile à combustible.
